# EUROPÄISCHE PATENTSCHRIFT

(11) **EP 1 162 343 B1**
(45) Veröffentlichungstag und Bekanntmachung des Hinweises auf die Patenterteilung: **04.06.2003**
(21) Anmeldenummer: 01119583.1
(22) Anmeldetag: 25.11.1998
(51) Int. Cl.: E21B 10/44

(54) **Gesteinsbohrwerkzeug**
Rock drilling tool
Outil de forage pour roche

(30) Priorität: 04.12.1997 DE 19753731
(43) Veröffentlichungstag der Anmeldung: 12.12.2001
(62) Teilanmeldung aus: 98963379.7
(73) Patentinhaber: Hawera Probst GmbH, 88212 Ravensburg (DE)
(72) Erfinder: Fuss, Mathias, 70771 Leinfelden-Echterdingen (DE); Wagegg, Thomas, 3924 St. Niklaus / Wallis (CH); Moser, Bernhard, 88361 Altshausen (DE)
(74) Vertreter: Patentanwälte Eisele, Otten & Roth

(56) Entgegenhaltungen:
- US-A- 4 967 855
- US-A- 5 487 434

## Beschreibung

Die Erfindung betrifft ein Bohrwerkzeug insbesondere ein Gesteinsbohrwerkzeug nach dem Oberbegriff des Anspruchs 1.

### Stand der Technik:

Gesteinsbohrer bestehen aus einem, meist mit einer Hartmetall-Schneidplatte versehenen Bohrerkopf, einer sich hieran anschließenden ein- oder mehrgängigen spiralförmigen Förderwendel sowie einem nachfolgenden Einspannschaft zur Befestigung in einer Antriebsmaschine. Die Förderwendel hat bei Gesteinsbohrern die Hauptaufgabe, das durch die Hartmetallschneide gelöste Material, d. h. das Bohrmehl oder Bohrklein, aus dem Bohrloch herauszufördern. Dabei spielt die Größe der Bohrmehlnut, d. h. der freie Förderquerschnitt, für die Leistungsfähigkeit des Bohrers eine entscheidende Rolle, d. h. ein guter Bohrmehltransport gewährleistet einen guten Vorschub und verhindert Rattermarken im Bohrloch sowie eine Beschädigung des Bohrers durch Verklemmen, Überhitzen oder dergleichen. Auch die Standzeiten eines Bohrwerkzeugs werden durch die guten Fördereigenschaften der Bohrmehlnut beeinflußt.

Die Förderwendel hat darüber hinaus auch Führungseigenschaften des Bohrwerkzeugs im Bohrloch zu erfüllen.

Die wendelförmige Abfuhrnut für Bohrmehl einer ein- oder mehrgängigen Förderwendel wird beidseitig von ebenfalls wendelförmig verlaufenden Stegen begrenzt. Dabei wird eine in Transportrichtung des Bohrmehls, d. h. in Richtung Einspannschaft, weisende Tragfläche oder Transportfläche für das Bohrmehl durch die Stege gebildet. Die Umfangsfläche oder Mantelfläche eines Stegs bildet die sogenannte Rückenfläche mit einer bestimmten Rückenbreite des Stegs. Je breiter diese Rückenfläche ausgeführt ist, um so besser sind die Führungseigenschaften des Bohrwerkzeugs im Bohrloch. Nachteilig hieran ist jedoch die vergrößerte Reibung im Bohrloch und das verkleinerte Nutenvolumen zum Abtransport des Bohrmehls. Es müssen demnach Kompromisse zwischen Breite der Rückenfläche der Stege und des daraus resultierenden Nutenvolumens einerseits und den geforderten Führungseigenschaften andererseits getroffen werden.

Aus der DE-AS 20 13 328 ist der prinzipielle Aufbau einer solchen zweigängigen Förderwendel in den dortigen Figuren dargestellt.

Es gibt eine Reihe von Vorschlägen, die Fördereigenschaften des Bohrmehls in den Bohrmehlnuten zu verbessern. Beispielsweise ist gemäß der EP 0 126 409 B2 vorgesehen, die Steigungshöhe der Förderwendel in Richtung Einspannende zu vergrößern, um so im Bereich des Bohrerkopfes eine erhöhte Anzahl von Stegflächen zur Verbesserung der Führungseigenschaften zur Verfügung zu stellen. Hierdurch vergrößert sich auch die Bohrmehlnut in Richtung Einspannende, d. h. in Förderrichtung des Bohrmehls, so daß es nicht zu einem Verklemmen des Bohrers kommen kann.

In der DE 30 14 693 C2 ist ausgeführt, daß gute Fördereigenschaften einer Förderwendel nach dem Prinzip einer Förderschnecke nur dann vorliegen, wenn zwischen dem in der Abfuhrnut befindlichen Bohrklein und der Wandung des Bohrlochs ein größerer Reibungswiderstand als zwischen dem Bohrklein und der Oberfläche der Abfuhrnut besteht. Hierfür sei es erforderlich, daß das Nutenvolumen der Bohrmehlnut stets an die anfallende Menge an Bohrmehl angepaßt ist, um diese Reibungsverhältnisse zu schaffen. Dies ist jedoch aufgrund der unterschiedlich anfallenden Menge an Bohrmehl aufgrund unterschiedlicher Bohrbedingungen nicht möglich. Dieser Stand der Technik schlägt deshalb vor, die Bohrmehlnut abschnittsweise in Richtung Einspannende zu vergrößern.

Aus der DE 43 38 667 A1 ist ein Gesteinsbohrer bekannt geworden, bei welchem eine Verminderung der Wandreibung dadurch erzeugt wird, daß die Rückenflächen der spiralförmigen Stege darin eingebrachte Nuten aufweisen. Diese Nebennuten bewirken in erster Linie eine Reduzierung der Fläche der Rückenstege und vermindern damit die Reibung. In gewissem Umfang können sie auch zur Abfuhr von Bohrgut dienen, was jedoch lediglich ein Nebeneffekt darstellt.

Der Erfindung liegt die Aufgabe zugrunde, ein Bohrwerkzeug zu schaffen, welches gegenüber herkömmlichen Bohrwerkzeugen verbesserte Fördereigenschaften für das Bohrgut aufweist, bei einer Verminderung der Wandreibung. Dabei sollen möglichst einfache und damit kostengünstige konstruktive Maßnahmen den gewünschten Erfolg herbeiführen.

Diese Aufgabe wird ausgehend von einem Bohrwerkzeug nach dem Oberbegriff des Anspruchs 1 durch die kennzeichnenden Merkmale des Anspruchs 1 gelöst.

In den Unteransprüchen sind vorteilhafte und zweckmäßige Weiterbildungen des Gesteinsbohrwerkzeugs nach Anspruch 1 angegeben.

Der Erfindung liegt die Erkenntnis zugrunde, daß gute Fördereigenschaften des Bohrmehls in Bohrmehlnuten nicht zuletzt auch durch die Größe der zur Verfügung stehenden Bohrmehl-Tragflächen bestimmt wird. Diese Größe wird durch die Anzahl der vorhandenen Abfuhrnuten mit jeweils einer vorhandenen Tragfläche bestimmt. Die erfindungsgemäße Ausbildung des Bohrwerkzeugs sieht vor, daß außer den üblicherweise vorgesehenen Hauptstegen mit entsprechenden Tragflächen, Förderkanten oder Förderflanken zusätzlich sogenannte Nebenförderelemente vorgesehen sind, die ihrerseits zusätzliche Bohrmehltragflächen bilden. Erfindungsgemäß sind hierfür zusätzliche Kernausbuchtungen vorgesehen, zur Bildung von zusätzlichen Tragflächen oder Förderkanten für Bohrmehl.

Durch erfindungsgemäße Maßnahmen kann die Abfuhrnut als sogenannte Doppelnut oder Mehrfachnut gebildet werden, so daß vorzugsweise innerhalb einer Abfuhrnut mehrere Einzelnuten mit zugehörigen Tragflächen für Bohrmehl vorhanden sind.

Ausgehend von dieser Grunderkenntnis ergeben sich eine Vielzahl von Gestaltungsmöglichkeiten zur Verwirklichung dieser Grundidee. Diese Gestaltungsmöglichkeiten beinhalten eine Variation der Art der Anordnung der Nebentragflächen in Form von Nebenförderkanten. Variiert werden kann auch die Anzahl solcher Nebenförderelemente, wodurch nicht zuletzt auch die Aufteilung der Abfuhrnut in gleich große oder unterschiedlich große Teil-Abfuhrnuten erfolgt, mit gleich großen oder unterschiedlich großen Nutentiefen.

Verschiedene Ausführungsbeispiele des erfindungsgemäßen Grundgedankens sind in der Zeichnung dargestellt und in der nachfolgenden Beschreibung näher erläutert.

Es zeigen
- Fig. 1-12: das Grundprinzip des erfindungsgemäßen Bohrwerkzeugs mit Ausführungsbeispielen, die jedoch nicht Schutzgegenstand dieser Anmeldung sind,
- Fig. 12-13: verschiedene Ausführungsvarianten des Bohrwerkzeugs die Schutzgegenstand der vorliegenden Erfindung sind.

### I. Beschreibung der nicht unter Schutz gestellten Ausführungsformen zur Erläuterung des Grundprinzips:

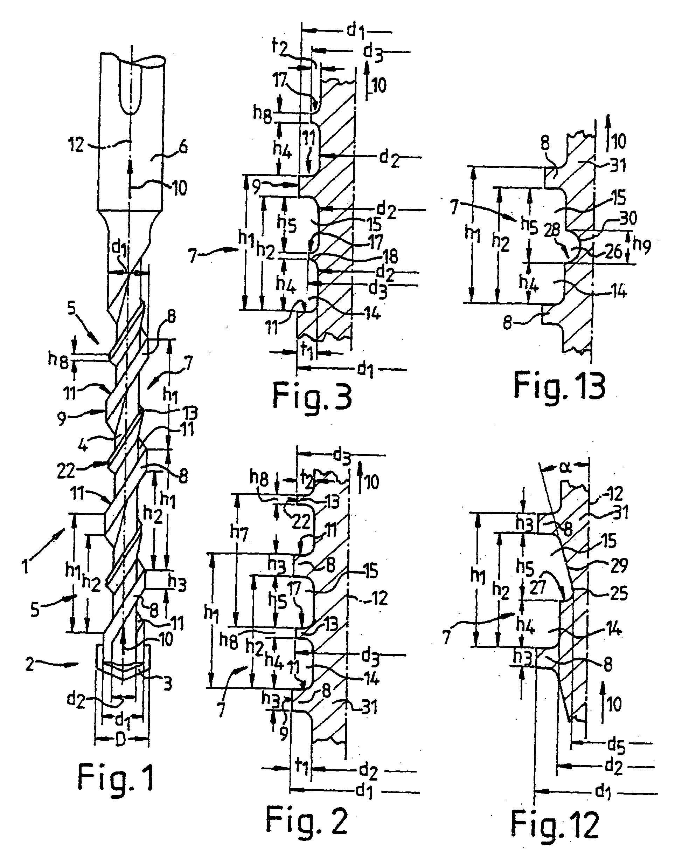

Das in Fig. 1 dargestellte Bohrwerkzeug beschreibt das Grundprinzip der Erfindung. Hier wird das Prinzip der Bildung von Haupt- und Nebenförderwendeln dadurch bewirkt, daß innerhalb einer bestehenden Abfuhrnut 7 einzelne Abfuhrnut-Abschnitte gebildet werden, die für sich gesehen zusätzliche Bohrmehltragflächen bilden. Eine Variante dieses Grundprinzips ist in den Fig. 2 bis 13 jeweils dargestellt.

Das in Fig. 1 dargestellte, jedoch in dieser Anmeldung nicht unter Schutz gestellte Gesteinsbohrwerkzeug 1 besteht aus einem Bohrerkopf 2, vorzugsweise mit stirnseitig vorgesehener Hartmetall-Schneidplatte 3, einem Wendelschaft 4 mit spiralförmiger Förderwendel 5 und einem sich anschließenden Einspannschaft 6 zum Einsetzen in eine Antriebsmaschine.

Beim Bohrwerkzeug nach Fig. 1 ist die spiralförmige Förderwendel eingängig mit der Steigungshöhe (h₁) ausgebildet, wodurch sich eine umlaufende wendelförmige Abfuhrnut 7 mit der Nutenhöhe h₂ ergibt, die beidseitig von einem ebenfalls wendelförmig verlaufenden Steg 8 begrenzt ist. Die Steghöhe h₃ bildet den äußeren Umfang oder die Rückenfläche 9 des Stegs 8. Die Rückenfläche 9 weist den Förderwendeldurchmesser d₁ auf. Der Nenndurchmesser des Bohrwerkzeugs wird gebildet durch den Durchmesser D der Hartmetall-Schneidplatte 3. Der Kerndurchmesser des Bohrerkerns 31 der Förderwendel ist mit d₂ bezeichnet.

Das durch die Bohrmehlnut oder Abfuhrnut 7 geförderte Bohrmehl oder Bohrklein stützt sich auf der in Förderrichtung 10 weisenden Tragfläche 11 ab, die einen etwa rechtwinkligen Verlauf zur Bohrerlängsachse 12 aufweist.

Gemäß der Darstellung nach Fig. 1 sowie der vergrößerten Darstellung in Fig. 2 befindet sich innerhalb der Abfuhrnut 7 ein sogenannter Nebensteg 13. Dieser Nebensteg 13 stellt grundsätzlich eine verkleinerte Ausführungsform des Hauptstegs 8 dar. Er kann jedoch auch geometrisch variieren. Die Abfuhrnut 7 mit der Höhe h₂ wird durch einen Nebensteg 13 in einen unteren Nutenabschnitt 14 mit der Höhe h₄ und einem oberen Nutenabschnitt 15 mit der Höhe h₅ aufgeteilt. Die Steghöhe des Nebenstegs 13 ist mit h₈ bezeichnet. Die äußere Rückenfläche des Nebenstegs 13 ist mit Bezugszeichen 22 bezeichnet. Der Außendurchmesser der äußeren Rückenfläche 22 ist mit d₃ angegeben.

Durch den zusätzlichen Nebensteg 13 zum Hauptsteg 8 entsteht eine zusätzliche Tragfläche 17, die ebenfalls etwa rechtwinklig zur Bohrerlängsachse 10 verläuft.

Der Außendurchmesser d₃ der Nebenstege ist in der Darstellung nach Fig. 1 und 2 nur geringfügig kleiner bemessen als der Außendurchmesser d₁ der Förderwendel 7. Hierdurch bildet die Abfuhrnut 7 eine Art Doppelnut mit den Nutabschnitten 14, 15 und der Haupttragfläche 11 sowie der Nebentragfläche 17 für das Bohrmehl. Der Nebensteg 13 verläuft demnach ebenfalls als spiralförmige Nebenförderwendel mit der Steigungshöhe h₇ innerhalb der Abfuhrnut 7.

Gemäß den Darstellungen nach Fig. 1 und 2 sind der untere Nutenabschnitt 14 und der obere Nutenabschnitt 15 mit ihrer Höhe h₄ und h₅ etwa in gleicher Größe ausgebildet. Gleiches gilt für die Darstellung nach Fig. 3. Hier sind gleiche Teile mit gleichen Bezugszeichen versehen. In Fig. 3 ist jedoch der Außendurchmesser d₃ des dortigen Nebenstegs 18 deutlich kleiner bemessen, so daß sich nur eine kleinere Tragfläche 17 für das zu transportierende Bohrmehl ergibt. Die Nutenaufteilung der Nutenabschnitte 14, 15 ist in Fig. 3, ebenso wie in Fig. 2, symmetrisch vorgenommen, d. h. h₄ ≈ h₅. Das Durchmesserverhältnis d₃ zu d₁ liegt bei den Darstellungen nach Fig. 2 und 3 im Bereich von etwa 0,7 bis 0,95, um eine ausreichende Nebentragfläche 17 zu bilden. Es kann in Sonderfällen auch zweckmäßig sein, hier gleiche Außendurchmesser zu wählen.

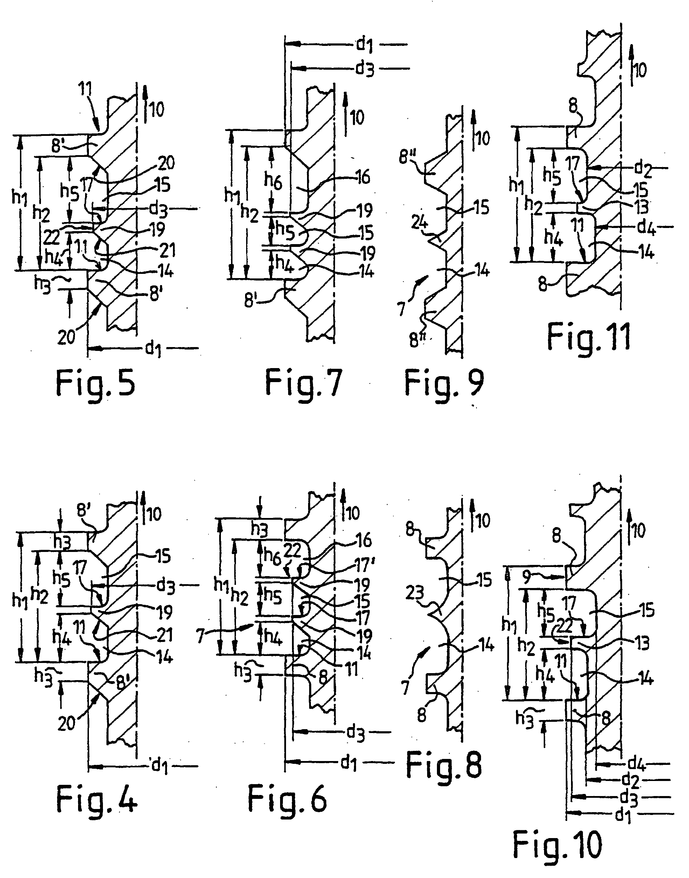

In den Fig. 4 bis 11 sind weitere Varianten des Grundprinzips nach den beschriebenen Fig. 2 und 3 angegeben. Gleiche Teile sind mit gleichen Bezugszeichen versehen.

Unterschiedlich zur Darstellung nach Fig. 2 sind in Fig. 4 und 5 sowohl der Hauptsteg 8' als auch der Nebensteg 19 in einer Art Sägezahnform ausgebildet, d. h. der der jeweiligen Tragfläche 11, 17 gegenüberliegende Bereich des jeweiligen Stegs ist als abgeschrägte Fläche 20 für den Hauptsteg 8' und als abgeschrägte Fläche 21 für den Nebensteg 19 ausgebildet.

In Fig. 4 sind die Abfuhrnutenabschnitte 14, 15 wiederum symmetrisch ausgebildet, d. h. h₄ ≈ h₅. In Fig. 5 liegt eine asymmetrische Anordnung für die Nutenaufteilung vor. Hier ist h₄ < h₅, d. h. der Abfuhrnutabschnitt 14 ist kleiner als der Abfuhrnutabschnitt 15. Die Durchmesser d₃ der äußeren Rückenflächen 22 der Nebenstege 19 können analog zur Darstellung nach den Fig. 2 und 3 ausgebildet sein. In der Darstellung nach Fig. 4 und 5 sind die Durchmesser d₃ gleich ausgebildet.

Eine weitere Variante des Grundprinzips ist in den Fig. 6 und 7 dargestellt. Hier ist die Abfuhrnut 7 in drei Teilabschnitte 14, 15, 16 aufgeteilt, mit den Höhen h₄, h₅ und h₆ der jeweiligen Abfuhrnut-Abschnitten. Der Hauptsteg 8 ist analog zur Darstellung nach Fig. 2 und 3 im wesentlichen rechtwinklig, die Nebenstege 19 analog zu den Darstellungen nach Fig. 4 und 5 nach Art einer Sägezahnform ausgebildet.

Die Darstellungen nach Fig. 7 unterscheidet sich von der nach Fig. 6 dadurch, daß wiederum eine asymmetrische Aufteilung der Nutenabschnitte 14, 15, 16 vorgenommen wird, wobei der untere 14 und der mittlere Nutenabschnitt 15 etwa eine gleiche Höhe h₄ ≈ h₅ aufweisen, während die Nutenhöhe h₆ des oberen Nutenabschnitts 16 etwa doppelt so groß ist wie die Höhen h₄, h₅.

Ähnlich wie in den Fig. 4 und 5 sind auch in Fig. 7 die Stege 8', 9 nach Art einer Sägezahnform ausgebildet.

In den Fig. 6 und 7 sind die Außendurchmesser d₃ der äußeren Rückenflächen 22 in einem Abmessungsbereich zum Förderwendeldurchmesser d₁, wie dies zu Fig. 2 und 3 beschrieben ist.

Die Darstellung nach Fig. 8 entspricht weitestgehend der Darstellung nach Fig. 2, jedoch mit dem Unterschied, daß die Stegform des Nebenstegs 23 bogenförmig und spitz zulaufend ausgebildet ist, bei ansonsten symmetrischer Anordnung innerhalb der Abfuhrnut 7. Der Hauptsteg 8 ist wiederum rechteckförmig ausgebildet, wie dies zu Fig. 2 und 3 beschrieben ist.

Die Darstellung nach Fig. 9 zeigt einen dreieckförmigen Nebensteg 24, der wiederum symmetrisch in der Abfuhrnut 7 angeordnet ist. Die Hauptstege 8" sind im Querschnitt trapezförmig ausgebildet. Im übrigen liegt eine symmetrische Anordnung der Abfuhrnut-Abschnitte 14, 15 innerhalb der Abfuhrnut 7 vor.

Bei der Darstellung nach den Fig. 2 bis 9 sind die Kerndurchmesser aller Abfuhrnut-Abschnitte etwa gleich ausgebildet. Dieser Kerndurchmesser ist mit d₂ bezeichnet.

Demgegenüber zeigen die Darstellungen nach Fig. 10 und 11 Nutenabschnitte 14, 15 mit unterschiedlichem Kerndurchmesser.

In Fig. 10 ist der untere Nutenabschnitt 14 mit einem Kerndurchmesser d₂, der obere Nutenabschnitt 15 mit einem Kerndurchmesser d₄ ausgebildet, wobei d₄ < d₂ ist. Durch eine Verkleinerung des Kerndurchmessers im oberen Nutenabschnitt 15 kann das Nutenvolumen zur Aufnahme von Bohrmehl noch weitere vergrößert werden. Auch die Nebentragfläche 17 des Nebenstegs 13 vergrößert sich damit. Hierdurch kann der verkleinerte Außendurchmesser d₃ (d₃ < d₁) kompensiert werden.

Der umgekehrte Fall liegt in der Darstellung nach Fig. 11 vor. Hier ist der untere Nutenabschnitt 14 mit einem kleineren Kerndurchmesser d₄ ausgestattet, während der obere Nutenabschnitt 15 den normalen Kerndurchmesser d₂ aufweist.

Die Darstellungen nach den Fig. 2 bis 11 zeigen auf, daß sich eine Vielzahl von Variationsmöglichkeiten ergeben, um innerhalb einer Abfuhrnut 7 einer ein- oder mehrgängigen Förderwendel Nutenabschnitte herzustellen, indem ein Nebensteg 13, 18, 19 zum Hauptsteg 8, 8', 8'' gebildet wird. Die geometrische Ausbildung dieser Nebenstege kann in verschiedenen Variationen erfolgen. Auch die Symmetrie oder Asymmetrie der verschiedenen Nutenabschnitte innerhalb der Abfuhrnut 7 kann die Eigenschaften der Abfuhrnut beeinflussen. Schließlich können verschiedene Kerndurchmesser der Nutenabschnitte zu verschieden großen Nutenvolumen führen.

### II. Erfindungsgemäße Ausführungsbeispiele;

Die Erfindung wird durch die Ausführungsbeispiele nach Fig. 12 und 13 näher erläutert, wobei das Grundprinzip in den vorher beschriebenen Fig. 1 bis 11 erörtert ist. Anstelle eines oder mehrerer zusätzlichen Nebenstege zum Hauptsteg 8 gemäß Fig. 1 bis 11 werden hier sozusagen negative Stege durch Ausbuchtungen 25, 26 gebildet. Hierfür wird der Kernquerschnitt der Förderwendel durch eine entsprechende Ausbuchtung geschwächt, die dann zur entsprechenden Tragflächen 27, 28 führen.

Beim Ausführungsbeispiel nach Fig. 12 wird demzufolge eine nasenförmige Aussparung 29 in den Förderwendelkern eingebracht, was zu einer maximalen Verringerung des Kernquerschnitts auf den Durchmesser d₅ führt. Die so ausgeführte Abschrägung weist gegenüber der Bohrerlängsachse 12 einen Winkel α ≈ 15° auf.

Durch die so gebildete zusätzliche Tragfläche 27 wird die Abfuhrnut 7 in einen unteren Nutenabschnitt 14 mit der Höhe h₄ und einen oberen Nutenabschnitt 15 mit der Höhe h₅ geteilt, wobei h₄ ≤ h₅ ist.

Die in Fig. 12 dargestellte nasenförmige Aussparung 29 mit der Tragfläche 27 wird beim Ausführungsbeispiel nach Fig. 13 durch eine halbkreisförmige Aussparung 30 ersetzt, mit einer Höhe h₉. Die halbkreisförmige Aussparung 30 bildet wiederum eine zusätzliche Tragfläche 28 für Bohrmehl. Hierdurch wird die Abfuhrnut 7 auch beim Ausführungsbeispiel nach Fig. 13 in einen unteren Nutenabschnitt 14 und einen oberen Nutenabschnitt 15 aufgeteilt.

In allen Figuren ist mit Pfeil 10 die Transportrichtung des Bohrmehls innerhalb der Bohrmehlnuten angegeben, die in Richtung Einspannende 6 zeigt.

Die vorliegende Erfindung kann auch dadurch verwirklicht werden, daß anstelle von Abfuhrnut-Abschnitten innerhalb einer bestehenden Abfuhrnut mehrere spiralförmige Abfuhrnuten vorgesehen sind, die jedoch mit unterschiedlichen Außendurchmessern der jeweiligen, die Abfuhrnuten begrenzenden Stege versehen sind. Beispielsweise kann bei einer 2-spiraligen oder 4-spiraligen Förderwendel jeder zweite Steg in seinem Außendurchmesser kleiner ausgeführt werden, so daß hierdurch eine verminderte Wandreibung durch die verkleinerten Außendurchmesser entsteht. Diese Variation des Außendurchmessers der Stege kann in symmetrischer oder asymmetrischer Reihenfolge über die Länge der Förderwendel stattfinden. Sie kann auch beliebig an einem Steg selbst durchgeführt werden, d. h. ein Steg kann z. B. über einen Drehwinkel von n x 360° (mit n = 1, 2, 3) abwechselnd einen größeren oder einen kleineren Außendurchmesser aufweisen. Hierdurch wird die Wandreibung stets vermindert, bei nahezu gleichbleibenden Fördereigenschaften der Förderwendel.

Die Erfindung ist nicht auf die dargestellten und beschriebenen Ausführungsbeispiele beschränkt. Sie umfaßt auch vielmehr alle weiteren fachmännischen Abwandlungen im Rahmen der Schutzrechtsansprüche.
- 1: Gesteinsbohrwerkzeug
- 2: Bohrerkopf
- 3: Hartmetall-Schneidplatte
- 4: Wendelschaft
- 5: spiralförmige Förderwendel
- 6: Einspannschaft
- 7: Abfuhrnut
- 8: Steg (Haupt-)
- 9: äußerer Umfang (Rückenfläche)
- 10: Förderrichtung
- 11: Tragfläche (Haupt-)
- 12: Bohrerlängsachse
- 13: Nebensteg
- 14: unterer Nutenabschnitt
- 15: oberer Nutenabschnitt
- 16: Nutenabschnitt
- 17: Tragfläche (Neben-)
- 18: Nebensteg
- 19: Nebensteg
- 20: abgeschrägte Fläche
- 21: abgeschräfte Fläche
- 22: äußere Rückenfläche
- 23: Nebensteg
- 24: Nebensteg
- 25: Ausbuchtung
- 26: Ausbuchtung
- 27: Tragfläche
- 28: Tragfläche
- 29: nasenförmige Aussparung
- 30: halbkreisförmige Aussparung
- 31: Bohrerkern

- h₁: Steigungshöhe der Hauptförderwendel
- h₂: Nutenhöhe
- h₃: Steghöhe von 8
- h₄: unterer Nutenabschnitt
- h₅: oberer mittlerer Nutenabschnitt
- h₆: oberer Nutenabschnitt
- h₇: Steigungshöhe der Nebenförderwendel
- h₈: Steghöhe von 13
- h₉: Höhe der Ausbuchtung 30
- d₁: Förderwendeldurchmesser
- D: Nenndurchmesser
- d₂: Kerndurchmesser
- d₃: Außendurchmesser der Nebenförderwendel
- d₄: Kerndurchmesser
- d₅: Kerndurchmesser
- t₁: Nutentiefe (d₁-d₂)
- t₂: Nutentiefe (d₃-d₂)

## Patentansprüche

1. Bohrwerkzeug, insbesondere Gesteinsbohrer für drehende und/oder schlagende Beanspruchung, mit einem Bohrerkopf (2), einer sich hieran anschließenden, ein- oder mehrgängigen, spiralförmigen Förderwendel (5) mit wenigstens einer Abfuhrnut (7) für Bohrmehl und einem Einspannschaft (6), wobei die Abfuhrnut (7) der Förderwendel (5) von spiralförmig verlaufenden Hauptstegen (8) mit gleichem Außendurchmesser (d₁) begrenzt ist und innerhalb der Abfuhrnut (7) wenigstens zwei Abfuhrnut-Abschnitten (14, 15) gebildet sind, die von wenigstens einer spiralförmig umlaufenden Nebenförderwendel begrenzt sind, **dadurch gekennzeichnet, daß** die Nebenförderwendel durch eine Ausbuchtung (25, 26) im Bohrkern (31) gebildet ist.

2. Bohrwerkzeug nach Anspruch 1, **dadurch gekennzeichnet, daß** eine zwei- oder vierspiralige Förderwendel (5) vorgesehen ist, wobei die die jeweilige Abfuhrnutabschnitte (14, 15) begrenzenden Hauptstege (8) jeweils abwechselnd unterschiedliche Außendurchmesser (d₁, d₂) und/oder unterschiedliche Rückenstegbreiten (h₃, h₈) aufweisen.

3. Bohrwerkzeug nach Anspruch 1 oder 2, **dadurch gekennzeichnet, daß** eine oder mehrere Abfuhrnuten (7) der Förderwendel (5) in zwei oder mehr Abfuhrnut-Abschnitte (14, 15) unterteilt ist, wobei jeder Abschnitt eine Bohrmehl-Tragfläche (27, 28) aufweist.

4. Bohrwerkzeug nach einem der Ansprüche 1 bis 3, **dadurch gekennzeichnet, daß** die Abfuhrnut (7) von zwei Hauptstegen (8) begrenzt ist und sich zwischen den Hauptstegen (8) wenigstens eine zusätzliche Bohrmehl-Tragfläche (28) in Form wenigstens einer Ausbuchtung (25, 26) im Bohrerkern (31) befindet.

5. Bohrwerkzeug nach einem der Ansprüche 1 bis 4, **dadurch gekennzeichnet, daß** zur Bildung von Bohrmehltragflächen die Tragflächen (11, 27, 28) der Hauptstege (8, 8') und/oder der Nebenförderwendel einen etwa rechtwinkligen Verlauf zur Bohrerlängsachse (12) aufweisen.

6. Bohrwerkzeug nach einem der Ansprüche 1 bis 5, **dadurch gekennzeichnet, daß** die Tragflächen (11, 27, 28) der Hauptstege (8, 8') und/oder der Nebenförderwendel einen ebenen, bauchigen oder taschenförmigen Verlauf aufweisen.

7. Bohrwerkzeug nach einem der Ansprüche 1 bis 6, **dadurch gekennzeichnet, daß** die Ausbuchtung (25, 26) im Bohrkern (31) als taschenförmige Tragfläche (27, 28) ausgebildet ist.

8. Bohrwerkzeug nach einem der vorgenannten Ansprüche, **dadurch gekennzeichnet, daß** die Querschnitte (11) der Hauptstege (8, 8') rechteckförmig, trapezförmig, halbtrapezförmig, dreieckförmig, halbkreisförmig und/oder spitz, flach oder rund zulaufend ausgebildet sind.

9. Bohrwerkzeug nach einem der vorgenannten Ansprüche, **dadurch gekennzeichnet, daß** die Nutentiefen (t₁, t₂) der Abfuhrnut-Abschnitte (14, 15, 16) gleich groß oder unterschiedlich ausgebildet sind, wobei wahlweise ein in Förderrichtung liegender Abfuhrnut-Abschnitt oder ein zur Bohrerspitze hinweisender Abfuhrnut-Abschnitt eine größere Nutentiefe (t₁, t₂) aufweist.

10. Bohrwerkzeug nach einem der vorhergehenden Ansprüchen, **dadurch gekennzeichnet, daß** ein oder mehrere Stege (8) einer ein- oder mehrspiralige Förderwendel im Bereich des spiralförmigen Umlaufs unterschiedliche Außendurchmesser und/oder unterschiedliche Rückenstegbreiten (h₃, h₈) aufweisen.

11. Bohrwerkzeug nach einem der vorhergehenden Ansprüche, **dadurch gekennzeichnet, daß** die Nebenförderwendel durch eine etwa im Querschnitt halbkreisförmige Ausbuchtung (30) gebildet ist.

12. Bohrwerkzeug nach einem der vorhergehenden Ansprüche, **dadurch gekennzeichnet, daß** die Nebenförderwendel als nasenförmige Aussparung (29) im Bereich eines Abfuhrnut-Abschnittes (15) gebildet ist.

## Claims

1. Drilling tool, in particular rock drill for rotary and/or percussive operation, with a drill bit head (2), an adjoining single-start or multi-start helical spiral conveyor (5) with at least one discharge groove (7) for cuttings and a chucking shaft (6), the discharge groove (7) of the spiral conveyor (5) being defined by helically extending main lands (8) with the same external diameter (d₁) and at least two discharge groove portions (14, 15) which are defined by at least one helical peripheral secondary spiral conveyor being formed within the discharge groove (7), **characterised in that** the secondary spiral conveyor is formed by an indentation (25, 26) in the drill core (31).

2. Drilling tool according to claim 1, **characterised in that** a two-helix or four-helix spiral conveyor (5) is provided, wherein the main lands (8) defining the respective discharge groove portions (14, 15) each have alternately different external diameters (d₁, d₂) and/or different flank widths (h₃, h₈) .

3. Drilling tool according to claim 1 or 2, **characterised in that** one or more discharge grooves (7) of the spiral conveyor (5) is/are subdivided into two or more discharge groove portions (14, 15), each portion having a bearing surface (27, 28) for the cuttings.

4. Drilling tool according to any of claims 1 to 3, **characterised in that** the discharge groove (7) is defined by two main lands (8) and between the main lands (8) at least one additional bearing surface (28) for the cuttings in the form of at least one indentation (25, 26) is located in the drill core (31).

5. Drilling tool according to any of claims 1 to 4, **characterised in that** the bearing surfaces (11, 27, 28) of the main lands (8, 8') and/or of the secondary spiral conveyor extend approximately perpendicular to the drill longitudinal axis (12) to form bearing surfaces for the cuttings.

6. Drilling tool according to any of claims 1 to 5, **characterised in that** the bearing surfaces (11, 27, 28) of the main lands (8, 8') and/or the secondary spiral conveyor are planar, concave or pocket-shaped.

7. Drilling tool according to any of claims 1 to 6, **characterised in that** the indentation (25, 26) in the drill core (31) is formed as a pocket-shaped bearing surface (27, 28).

8. Drilling tool according to any of the preceding claims, **characterised in that** the cross-portions (11) of the main lands (8, 8') are rectangular, trapezoidal, semi-trapezoidal, triangular, semi-circular and/or converge to a pointed, flat or round shape.

9. Drilling tool according to any of the preceding claims, **characterised in that** the groove depths (t₁, t₂) of the discharge groove portions (14, 15, 16) are constructed to be the same size or different, a discharge groove portion lying in the conveying direction or a discharge groove portion facing the drill tip optionally having a larger groove depth (t₁, t₂) .

10. Drilling tool according to any of the preceding claims, **characterised in that** one or more lands (8) of a single-helix or multi-helix spiral conveyor has/have different external diameters and/or different flank widths (h₃, h₈) in the region of the helical periphery.

11. Drilling tool according to any of the preceding claims, **characterised in that** the secondary spiral conveyor is formed by an indentation (30) approximately semi-circular in cross-portion.

12. Drilling tool according to any of the preceding claims, **characterised in that** the secondary spiral conveyor is formed as a nose-shaped recess (29) in the region of a discharge groove portion (15).

## Revendications

1. Outil de forage, en particulier fleuret à rocher, pour une sollicitation en rotation et/ou en percussion, comportant une tête de fleuret (2), une hélice de transport (5) en forme de spirale s'y raccordant à un ou plusieurs filets avec au moins une gorge d'évacuation (7) pour la poussière de forage, et une tige de serrage (6), la gorge d'évacuation (7) de l'hélice de transport (5) étant limitée par des âmes principales (8) s'étendant sous forme de spirale ayant un même diamètre externe (d₁) et, à l'intérieur de la gorge d'évacuation (7), au moins deux tronçons de gorge d'évacuation (14, 15) étant formés, qui sont limités par au moins une hélice de transport auxiliaire périphérique sous forme de spirale,
**caractérisé en ce que** l'hélice de transport auxiliaire est formée par un creux (25, 26) dans le noyau (31) du fleuret.

2. Outil de forage selon la revendication 1,
**caractérisé en ce qu'**une hélice de transport à deux ou quatre spirales (5) est prévue, les âmes principales (8) limitant les tronçons de gorge d'évacuation (14, 15) respectifs présentant, à chaque fois, alternativement, différents diamètres externes (d₁, d₂) et/ou différentes largeurs de l'âme dorsale (h₃, h₈).

3. Outil de forage selon la revendication 1 ou 2,
**caractérisé en ce qu'**une ou plusieurs gorges d'évacuation (7) de l'hélice de transport (5) sont subdivisées en deux ou plus tronçons de gorge d'évacuation (14, 15), chaque tronçon présentant une surface de support (27, 28) pour la poussière de forage.

4. Outil de forage selon une des revendications 1 à 3,
**caractérisé en ce que** la gorge d'évacuation (7) est limitée par deux âmes principales (8) et, entre les âmes principales (8), se trouve au moins une surface de support supplémentaire (28) pour la poussière de forage sous forme d'au moins un creux (25, 26) dans le noyau (31) du fleuret.

5. Outil de forage selon une des revendications 1 à 4,
**caractérisé en ce que**, pour former des surfaces de support pour la poussière de forage, les surfaces de support (11, 27, 28) des âmes principales (8, 8') et/ou de l'hélice de transport auxiliaire présentent une allure sensiblement orthogonale par rapport à l'axe longitudinal (12) du fleuret.

6. Outil de forage selon une des revendications 1 à 5,
**caractérisé en ce que** les surfaces de support (11, 27, 28) des âmes principales (8, 8') et/ou de l'hélice de transport auxiliaire présentent une allure plane, bombée ou en forme de poche.

7. Outil de forage selon une des revendications 1 à 6,
**caractérisé en ce que** le creux (25, 26) dans le noyau du fleuret (31) est réalisé comme surface de support (27, 28) en forme de poche.

8. Outil de forage selon une des revendications précitées,
**caractérisé en ce que** les sections transversales (11) des âmes principales (8, 8') sont réalisées de façon rectangulaire, trapézoïdale, semitrapézoïdale, triangulaire, semi-circulaire et/ou en se terminant en pointe, de façon plate ou ronde.

9. Outil de forage selon une des revendications précitées,
**caractérisé en ce que** les profondeurs de gorge (t₁, t₂) des tronçons (14, 15, 16) de gorge d'évacuation sont réalisées de même taille ou de façon différente, au choix un tronçon de gorge d'évacuation se trouvant dans la direction de transport ou un tronçon de gorge d'évacuation en direction de la pointe du fleuret présentant une profondeur de gorge plus grande (t₁, t₂).

10. Outil de forage selon une des revendications précédentes,
**caractérisé en ce qu'**une ou plusieurs âmes (8) d'une hélice de transport à une ou plusieurs spirales présentent, dans la zone de la périphérie en forme de spirale, différents diamètres externes et/ou différentes largeurs de l'âme dorsale (h₃, h₈).

11. Outil de forage selon une des revendications précédentes,
**caractérisé en ce que** l'hélice de transport auxiliaire est formée par un creux (30) sensiblement semi-circulaire en section transversale.

12. Outil de forage selon une des revendications précédentes,
**caractérisé en ce que** l'hélice de transport auxiliaire est formée comme évidement (29) en forme de nez dans la zone d'un tronçon (15) de la gorge d'évacuation.
